# EUROPÄISCHE PATENTANMELDUNG

(11) **EP 1 596 161 A1**
(43) Veröffentlichungstag der Anmeldung: **16.11.2005**
(21) Anmeldenummer: 05102672.2
(22) Anmeldetag: 05.04.2005
(51) Int. Cl.: G01C 21/26

(54) **Verfahren zum Betreiben eines Navigationssystems bei einer Fährefahrt**

(30) Priorität: 14.05.2004 DE 102004023937
(71) Anmelder: ROBERT BOSCH GMBH, 70442 Stuttgart (DE)
(72) Erfinder: Xu, Yonglong, 31139, Hildesheim (DE)

(57) **Zusammenfassung**

Um ein Verfahren zum Betreiben eines Navigationssystems in einem Kraftfahrzeug mit einer Ortungseinheit, einer Routenberechnungseinheit und einer Navigationszielführungseinheit zur Ausgabe von Richtungsangaben und mit einem Datenspeicher für das Wegenetz des zu befahrenden Gebiets zu schaffen bei dem auch nach einer Fähr- oder Autoverladezugfahrt (F) unmittelbar nach der Wiederaufnahme der Fahrt des Kraftfahrzeugs stets die korrekten Ortungsdaten und damit korrekte Richtungsangaben für die Navigationszielführung ausgegeben werden wird vorgeschlagen, dass bei Passieren einer Anfangsstelle (B) einer Fähre, die im Datenspeicher markiert ist, die bevorstehende Fährefahrt durch eine Fährefahrterkennungseinheit erkannt wird, so dass eine Ortungsberechnung während der gesamten Fährefahrt aufrechterhalten wird.

## Beschreibung

### TECHNISCHES GEBIET

Die Erfindung betrifft ein Verfahren zum Betreiben eines Navigationssystems in einem Kraftfahrzeug mit einer Ortungseinheit, einer Routenberechnungseinheit und einer Navigationszielführungseinheit zur Ausgabe von Richtungsangaben und mit einem Datenspeicher für das Wegenetz des zu befahrenden Gebiets.

### STAND DER TECHNIK

Navigationssysteme erarbeiten auf Grundlage der in einem Datenspeicher wie einer CD-Rom oder einer DVD oder einem sonstigen Speichermedium abgespeicherten Informationen über das Strecken- und Wegenetz die von einem Nutzer gewünschte Fahrtroute von einem Ausgangspunkt, beispielsweise der aktuellen Position des mit dem Navigationssystem ausgerüsteten Kraftfahrzeugs zu dem vom Nutzer ausgewählten Zielort. Hierbei wird üblicherweise die Ortungseinheit sofort nach Einschaltung des Endgerätes gestartet. Nach Starten des Navigationssystems werden in einer Routenberechnungseinheit die vom Nutzer eingegebenen Parameter wie beispielsweise eine Auswahl der zu befahrenden Straßen oder eine angenommene Durchschnittsgeschwindigkeit oder sonstige fahrzeugspezifische Daten berücksichtigt, um eine den Wünschen des Nutzers entsprechende beziehungsweise eine möglichst kurze oder schnelle oder optimale Fahrtroute zum Zielort zu berechnen. Während des Befahrens der Fahrtroute werden die jeweiligen Positions- oder Ortungsdaten, die von einer Positionsbestimmungseinheit beziehungsweise einer Ortungseinheit u. a. mit einem Empfänger für satellitengestützte Ortungssysteme wie einem Empfänger für das GPS-System und/oder für das noch einzurichtende Galileo-System ermittelt werden, mit den im Datenspeicher abgelegten Daten bezüglich des Wegenetzes von einer Einrichtung zum Routenmatching beziehungsweise Mapmatching verglichen. Daraufhin werden mögliche Fahrempfehlungen durch eine Vorrichtung zur Navigationszielfiihrung vorbereitet und schließlich über optische und/oder akustische Ausgabevorrichtungen dem Nutzer die einzuschlagende Fahrtrichtung angezeigt. Beispielsweise kann auf einem Display ein entsprechender Pfeil angezeigt werden oder über einen Lautsprecher wird eine Sprachmitteilung ausgegeben.

Wird eine Wasserstraße mit einer Fähre überquert oder das Kraftfahrzeug zum Transport auf einem Autoverladezug abgestellt muss üblicherweise aus Sicherheitsgründen die Zündung des Kraftfahrzeugs abgeschaltet und die Feststellbremse betätigt werden, so dass das Kraftfahrzeug während der Fähre- oder Zugfahrt stillsteht. Sobald die Zündung abgeschaltet wird werden wegen des fehlenden Geschwindigkeitssignals und/oder wegen des bevorstehenden Ausschaltens des Endgeräts im Kraftfahrzeug die von der Ortungseinheit ermittelten letzten Ortungsdaten bezüglich der tatsächlichen Position, Richtung und Geschwindigkeit gegebenenfalls einschließlich deren Genauigkeitsschätzungen üblicherweise in einem Flash-Speicher abgelegt. Da die Ortungseinheit häufig eine einstellbare Nachlaufzeit aufweist, innerhalb der die Ortungseinheit nach Ausschalten des Endgerätes weiter aktiv ist und deren Werksvoreinstellung beispielsweise bei 35 Minuten liegt, wird auch während dieser Zeit bei der Fährefahrt die sich ändernde Position des Kraftfahrzeugs durch den in der Ortungseinheit befindlichen GPS-Empfänger erfasst. Da jedoch das Fahrzeug nur auf der Fähre oder dem Zug still steht und dementsprechend von bekannten Geschwindigkeitssensoren im Kraftfahrzeug das Geschwindigkeitssignal "Null" an die Ortungseinheit übermittelt wird nimmt diese an, dass das Kraftfahrzeug absolutstill steht und ignoriert daher die von dem GPS-Empfänger gelieferten Daten und friert die Ortungsberechnung ein, so dass die durch die Ortungseinheit ermittelten Ortungsdaten insbesondere Position, Richtung und Geschwindigkeit praktisch identisch sind wie die zuletzt im Flash-Speicher gespeicherten Daten. Ist auch die Nachlaufzeit der Ortungseinheit während der Fährefahrt abgelaufen, werden vor Beenden der Ortung die zuletzt ermittelten Ortungsdaten einschließlich der Position in den Flash-Speicher geschrieben, wobei die Navigationszielführung falls sie noch aktiv ist nach wie vor davon ausgeht, dass sich das Kraftfahrzeug am Ausgangspunkt, an dem die Zündung abgestellt wurde, befindet.

Nach dem Erreichen des Endpunkts der Fähre beziehungsweise des Autoverladezugs wird die Zündung wieder eingeschaltet und üblicherweise die Navigationszielführung erneut gestartet. Da diese aber auf die zuletzt im Flash-Speicher gespeicherten Ortungsdaten, die dem Beginn der Fährefahrt entsprechen, zurückgreift und damit eine erneute Ortung initialisiert wird, wird zumindest so lange, bis von der Ortungseinheit die tatsächliche Position und Richtung ermittelt wird, eine sogenannte "Offroad-Phase" angezeigt, da die zuerst ermittelte neue Position von der tatsächlichen erheblich abweicht. Dies kann bei einer ungefähr 30-minütigen Unterbrechung bei einer Fährefahrt dazu führen, dass die Ortungseinheit bis zu 90 Sekunden benötigt, um wieder korrekte Ortungsdaten bestimmen zu können und damit eine korrekte Navigationszielführung auszugeben. Die konkrete Zeitdauer für die "Offroad-Phase" ist dabei abhängig von der Empfangssituation der GPS-Signale sowie davon, wann das Fahrzeug wieder in Bewegung gesetzt wird. Innerhalb dieser Zeit verlässt der Nutzer aber üblicherweise die Fähre oder den Zug und biegt wieder in das öffentliche Straßennetz ein, so dass er anfangs keine oder nur fehlerhafte Informationen über die einzuschlagende Fahrtrichtung erhält.

Ausgehend von diesem Stand der Technik liegt der Erfindung die Aufgabe zugrunde, ein Verfahren zum Betreiben eines in einem Endgerät umgesetzten Navigationssystems in einem Kraftfahrzeug anzugeben, bei dem ein Stillstand des Kraftfahrzeugs wie auf einer Fähre oder einem Autoverladezug nicht dazu führt, dass beim Verlassen der Fähre oder des Zugs nach dem Wiedereinschalten der Zündung und des Endgerätes zunächst fehlerhafte Ortungsmeldungen ausgegeben werden.

Diese Aufgabe wird durch die im Anspruch 1 angegebenen Merkmale gelöst.

Der Kerngedanke der Erfindung besteht darin, dass beim Absolvieren einer Fährefahrt oder einer Fahrt mit einem Autoverladezug oder einem vergleichbaren Verkehrsmittel mit dem ein Kraftfahrzeug trotz stillstehender Räder von einer Anfangsstelle zu einer Endstelle transportierbar ist, eine Fährefahrterkennungseinheit im Navigationssystem beziehungsweise im Endgerät gestartet wird, wobei jeweils an der Anfangsstelle und an der Endstelle eine entsprechende Markierung im Datenspeicher und somit auch in der Fahrtroute vorgesehen ist. Sobald die Fährefahrterkennungseinheit feststellt, dass diese Anfangsstelle von dem Kraftfahrzeug passiert oder angefahren wird wird das Navigationssystem durch die Fährefahrterkennungseinheit dazu veranlasst trotz ausgeschalteter Zündung und/oder stillstehender Räder des Kraftfahrzeugs dennoch die Ortungsberechnung durch die Ortungseinheit fortzusetzen und dabei u. a. die empfangenen GPS-Daten weiter zu berücksichtigen, so dass die Ortungseinheit stets korrekte Ortungsdaten liefert. Das bedeutet, dass die Fährefahrterkennungseinheit erkennt, dass beispielsweise eine Fährefahrt durchgeführt wird und insbesondere von der Fährefahrterkennungseinheit die bekannte und feststehende Endstelle der Fährefahrt nach dem Wiedereinschalten der Zündung beziehungsweise dem Losfahren des Kraftfahrzeugs als Ausgangspunkt für die weitere Ausgabe von Richtungsangaben durch die Navigationszielführung angesehen wird. In gleicher Weise kann ein Autoverladezug mit einer entsprechenden Markierung für die Anfangsstelle oder bei einer Fahrt in umgekehrter Richtung für die Endstelle versehen sein.

Das bedeutet, dass die korrekte Ortungsberechnung während der gesamten Fährefahrt aufrechterhalten wird wobei trotz des fehlenden Signals der Geschwindigkeitssensoren u. a. die empfangenen GPS-Daten miteinbezogen werden. Im Fall des ausgeschalteten Endgerätes werden während einer Fährefahrt derartige Ortungsberechnungen und eine Fähreerkennung durch eine zweckmäßig verlängerte Ortungsnachlaufzeit trotzdem fortgesetzt.

Der Vorteil der Erfindung besteht darin, dass trotz des Stillstands des Fahrzeugs, der mit entsprechenden Sensoren, die über bekannte Datenbusse mit dem Navigationssystem in Verbindung stehen, feststellbar ist und/oder bei ausgeschalteter Zündung die korrekte Ortungsberechnung vorzugsweise unter der Einbeziehung von empfangenen GPS-Daten aufrechterhalten oder fortgeführt wird, so dass durch die Fährefahrterkennungseinheit eine Fährefahrt automatisch erkannt wird. Prinzipiell ist es auch möglich, dass der Beginn einer Fährefahrt in das Navigationssystem beziehungsweise die Fährefahrterkennungseinheit manuell eingegeben wird, falls noch keine entsprechende Markierung für eine neue Fährlinie im Datenspeicher vorhanden ist, um beim Verlassen der Fähre oder des Zugs die Zeit bis zur Ausgabe korrekter Richtungsangaben durch die Navigationszielführung zu verringern und unmittelbar korrekte Angaben zu erhalten.

Es versteht sich, dass ein an sich bekanntes Navigationssystem vom Fachmann in einfacher Weise hard- und/oder softwaremäßig zur Durchführung des Verfahrens ausgelegt werden kann, um auch bei stillstehendem Kraftfahrzeug die Ortungsdaten zu verarbeiten. Weiterhin sind die auf Datenspeichern abgelegten Informationen über das Wegenetz und somit auchdie errechneten Fahrtroutendaten mit zusätzlichen Markierungen für die Anfangsstelle und Endstelle von Fährverbindungen oder Zugverbindungen oder dergleichen versehen wobei diese Markierungen von der Fährefahrterkennungseinheit aus den Datenspeichern und/oder Fahrtroutendaten auslesbar sind.

Vorteilhafte Ausgestaltungen der Erfindung sind in den Unteransprüchen gekennzeichnet.

Um das Ende z. B. der Fährefahrt zuverlässig zu erkennen ist wie im Anspruch 2 gekennzeichnet auch die Endstelle beispielsweise auf der anderen Seite der Wasserstraße mit einer entsprechenden Markierung im Datenspeicher versehen. Da die Ortungseinheit während der Fährefahrt ständig weiter die aktuelle Ortung ermittelt kann von der Fährefahrterkennungseinheit festgestellt werden, dass die entsprechend markierte Endstelle erreicht ist, sobald die ermittelten Ortungsdaten im Rahmen der Messgenauigkeit mit der Markierung der Endstelle übereinstimmen. Somit kann von der Fährefahrterkennungseinheit die Beendigung der Fährefahrt festgestellt werden und ausgehend von der markierten Endstelle, die als Ausgangspunkt für eine Weiterfahrt angenommen wird, werden von der Navigationszielführung unmittelbar korrekte Richtungsangaben ausgegeben, um den Nutzer auf der gewünschten Fahrtroute zu leiten. Es versteht sich, dass diese Endstelle aus dem Datenspeicher in die errechnete Fahrtroute aufgenommen wird. Es ist für den Fachmann ersichtlich, dass bei Befahren der Fahrtroute in umgekehrter Fahrtrichtung die Anfangsstelle und die Endstelle in umgekehrter Reihenfolge passiert werden.

Gemäß der Ausgestaltung in Anspruch 3 sind der Anfangsstelle und der Endstelle jeweils mindestens ein Zufahrtspunkt zugeordnet, die vom Kraftfahrzeug passiert werden. Diese Zufahrtspunkte sind beispielsweise die Einfahrten in einen Zufahrtsbereich oder Wartebereich vor einer Fähre oder einem Autoverladezug. Sobald ein Zufahrtspunkt passiert ist besteht die Möglichkeit, dass das Kraftfahrzeug im Zufahrtsbereich abgestellt wird, bis es auf eine Fähre auffährt. Ebenso ist es möglich, dass das Kraftfahrzeug lediglich im Zufahrtsbereich abgestellt wird, um beispielsweise den Fährbetrieb zu besichtigen. Anschließend wird der Zufahrtsbereich wieder verlassen. Dies kann von der Fährefahrterkennungseinheit dadurch festgestellt werden, dass die Anfangsstelle wie z. B. eine Auffahrrampe vom Kraftfahrzeug nicht passiert wird. Nach Passieren der Anfangsstelle kann das Fahrzeug an der Anfangsstelle oder auf der Fähre parken, wenden oder wieder in den Zufahrtsbereich zurückfahren. Sobald das Kraftfahrzeug auf die Fähre oder den Zug aufgefahren ist, kann beispielsweise auf der Fähre auch noch mehrmals ein Umparken des Kraftfahrzeugs erfolgen oder die Zündung mehrmals ein- und ausgeschalt werden, wobei die Ortung kontinuierlich weiterläuft und nicht unterbrochen wird. Für das Umparken wird insbesondere ein Maximalwert für die Fahrzeuggeschwindigkeit angenommen beispielsweise 15 km/h und/oder eine zeitliche Obergrenze wie beispielsweise 120 Sekunden. Werden diese Grenzwerte, die bei üblichen Umparkvorgängen ausreichen sollten, überschritten nimmt die Fährefahrterkennungseinheit an, dass entweder keine Fährefahrt stattfindet oder die Fährefahrt beendet worden ist und die Navigationszielführung, falls sie aktiv ist, wird in bekannter Weise ausgehend von den durch die Ortungseinheit ermittelten Ortungsdaten weiter betrieben. Ist die endgültige Parkposition erreicht wird üblicherweise die Zündung ausgeschaltet und die Feststellbremse betätigt. Dies ist ebenfalls sensorisch erkennbar. Dennoch stehen die von der Ortungseinheit erfassten Ortungsdaten der Navigationszielführung falls sie aktiv ist während der gesamten Dauer der Fährfahrt zur Verfügung. Beim Verlassen der Fähre wird die im Datenspeicher beziehungsweise in der Fahrtroute markierte Endstelle passiert und üblicherweise der Zu- oder Abfahrtsfahrtsbereich am Zielhafen an einem Zu- beziehungsweise Abfahrtspunkt wiederum verlassen, der ebenfalls im Datenspeicher und somit auch in der Fahrtroute markiert ist und von der Navigationszielführung die Endstelle oder dessen Zufahrtspunkt als Ausgangspunkt zur Ausgabe weiterer Richtungshinweise angenommen.

Um eine ausreichende Nachlaufzeit für das Tätigsein der Ortungseinheit u. a. unter der Miteinbeziehung der empfangenen GPS-Daten zu erreichen ist gemäß dem Anspruch 4 die Nachlaufzeit für die Ortungseinheit und damit auch für die Fährefahrterkennungseinheit verlängert. Dies erfolgt insbesondere nach Passieren der Anfangsstelle um eine Zeitdauer, die sich aus der größeren der nachfolgenden Zeiten zusammensetzt nämlich der durchschnittlichen Wartezeit nach Passieren der Anfangsstelle und der ursprünglichen Initialnachlaufzeit. Zusätzlich wird eine durchschnittliche Zeit für eine Fähr- oder Zugfahrt zwischen Anfangsstelle und Endstelle sowie eine ausreichend dimensionierte Pufferzeit hinzuaddiert. Als Defaultwerte für die Wartezeit und Pufferzeit können beispielsweise jeweils 10 Minuten angenommen werden. Diese Wartezeit und Fahrtzeit sind vorzugsweise im Datenspeicher beziehungsweise in der Fahrtroute an der Anfangsstelle hinterlegt, um von der Fährefahrterkennungseinheit beim Passieren der Anfangsstelle ausgelesen zu werden. Somit ist gewährleistet, dass während der gesamten Fährefahrtzeit des Kraftfahrzeugs nachdem es die Anfangsstelle passiert hat und abgestellt worden ist die Ortungseinheit und die Fährefahrterkennungseinheit stets aktiv bleiben wobei eine korrekte Ortungsberechnung u. a. unter Einbeziehung von GPS-Daten stattfindet. Ist das Ende dieser Zeitspanne erreicht kann von der Fährefahrterkennungseinheit auch überprüft werden, ob die Fährefahrt zu Ende ist, da z. B. aufgrund äußerer Umstände die Fährfahrt länger als gewöhnlich dauert. Dies erfolgt u. a. durch eine Überprüfung ob die Zündung eingeschaltet ist, eine Feststellbremse gelöst wurde und/oder ob das Kraftfahrzeug wieder fährt. Ist dies nicht der Fall kann die Nachlaufzeit noch einmal um die Zeitdauer einer durchschnittlichen Fährfahrt verlängert werden.

Zur Erhöhung des Nutzungskomforts des Navigationssystems wird wie im Anspruch 5 gekennzeichnet während der Fähr- oder Zugfahrt von der Fährefahrterkennungseinheit eine akustische und/oder optische Mitteilung ausgegeben, dass sich das Kraftfahrzeug auf der Fahrt von der Anfangsstelle zur Endstelle befindet falls das Endgerät eingeschaltet ist. Die Durchführung einer Fähr- oder Zugfahrt wird durch das Passieren der Anfangsstelle und den anschließenden Stillstand des Kraftfahrzeugs von der Fährefahrterkennungseinheit festgestellt und bei eingeschaltetem Endgerät über eine Ausgabevorrichtung beispielsweise auf einem Display dem Nutzer eine entsprechende Information angezeigt. Während der Fährefahrt wird bei der aktivierten Navigationszielführung im Falle der "Offroad " Ausgabe stets die Fahrempfehlung für "Onroad" beziehungsweise Geradeausfahren ausgegeben.

Gemäß der Ausgestaltung in Anspruch 6 kann bei eingeschaltetem Endgerät der Fährefahrterkennungseinheit auch vom Nutzer beispielsweise durch Drücken eines Betätigungselements am Endgerät vorzugsweise im Armaturenbrett des Kraftfahrzeugs mitgeteilt werden, dass eine Fährefahrt durchgeführt wird. Durch das Betätigen einer "Soft- oder Hardkey-Taste" wird die Fährefahrterkennungseinheit gestartet. Damit wird ein interner Fährefahrtkennungs-"Fähre-Flag" in der Fährefahrterkennungseinheit vom Initialwert "Nein" auf "Ja" gesetzt und ein entsprechender Hinweis im Display des Endgeräts angezeigt. Nachfolgend kann der Nutzer von der Fährefahrterkennungseinheit aufgefordert werden, eine geschätzte oder dem Fahrplan entnommene Dauer der Fährfahrt einzugeben obwohl dafür ein Defaultwert von beispielsweise 30 Min. vorgesehen sein kann, so dass die Nachlaufzeit der Ortung, innerhalb derer die Ortungseinheit nach Ausschalten des Endgeräts weiter aktiv ist, auf die doppelte Dauer der Fährefahrt gesetzt wird, falls die bisherige Nachlaufzeit kleiner als diese Zeitspanne sein sollte. Von nun an kann das Navigationssystem und/oder das Endgerät ausgeschaltet werden. Während dieser Nachlaufzeit wird die Ortungsberechnung u. a. unter Einbeziehung von GPS-Daten fortgeführt unabhängig davon ob das Fahrzeug im Stillstand ist oder nicht, so dass beim Verlassen der Fähre der aktiven Navigationszielführung die aktuellen Ortungsdaten zur Ausgabe korrekter Richtungsangaben zur Verfügung stehen. Falls erstmalig die Ortungsnachlaufzeit nach Ausschalten des Endgerätes abgelaufen ist wird angenommen, dass die Fährefahrt beendet ist. Eine Beendigung der Fährefahrt kann bei eingeschaltetem Endgerät vom Nutzer ebenfalls manuell beispielsweise durch erneutes Drücken des Betätigungselements der Fährefahrterkennungseinheit mitgeteilt werden. Ebenso ist es möglich, dass bei Überschreitung eines Grenzwerts für die Fahrzeuggeschwindigkeit zum Beispiel 20 oder 25 Km/h wie es beim Verlassen der Fähre oder eines Autoverladezugs üblich ist die Beendigung von der Fährefahrterkennungseinheit selbständig angenommen wird. Vorzugsweise muss dieser Grenzwert für die Geschwindigkeit für eine Mindestdauer von z. B. 60 Sekunden überschritten werden, um zuverlässig das Verlassen der Fähre festzustellen. Anschließend wird der interne Fähre-Flag wieder auf "Nein" gesetzt und die Mitteilung, dass eine Fährefahrt durchgeführt wird vom Display gelöscht und die Ortungsnachlaufzeit wieder auf den ursprünglichen Initialwert gesetzt. Eine Fährefahrterkennung wird beendet und das Navigationssystem in üblicher Weise weiter betrieben. Diese Ausgestaltung bietet den Vorteil, dass korrekte Ortungsdaten während der Fährefahrt trotzdem berechnet werden können obwohl keine Route für die zu befahrende Strecke mit der Fähre berechnet wird oder die Fähre nicht anhand des hier beschrieben Modells digital erfasst und somit nicht in der aktuellen Route enthalten ist oder die automatische Fähreerkennung fehlgeschlagen ist.

Im Vorstehenden wurde das Verfahren zum Betreiben eines Navigationssystem stets im Zusammenhang mit einem Kraftfahrzeug beschrieben. Es versteht sich, dass das Verfahren aber auch bei einem Navigationssystem, das beispielsweise von einem Nutzer mitgeführt wird, einsetzbar ist.

### KURZBESCHREIBUNG DER ZEICHNUNGEN

Eine Ausführungsform der Erfindung wird nachstehend anhand der Zeichnungen näher erläutert. Es zeigen:
- Figur 1:: eine Darstellung der grundlegenden Vorgehensweise für die Fährefahrterkennungseinheit,
- Figur 2:: eine schematische Darstellung einer Fähremodellierung, und
- Figur 3a, 3b:: ein Flussdiagramm des in der Fährefahrterkennungseinheit verwendeten Verfahrens.

### BESTER WEG ZUR AUSFÜHRUNG DER ERFINDUNG

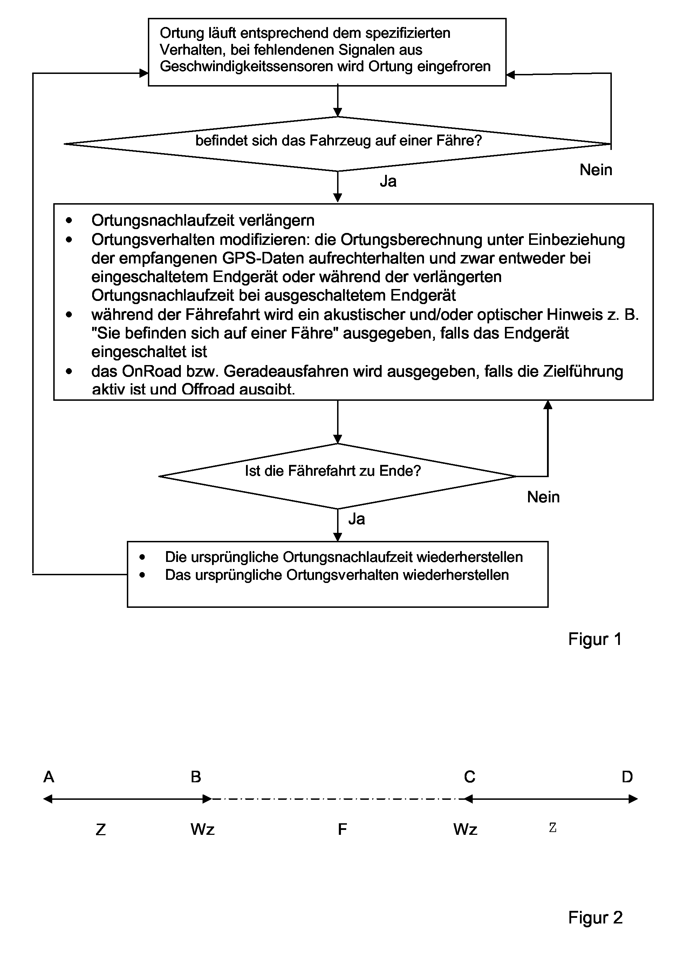

In Figur 1 wird die grundlegende Vorgehensweise für die Fährefahrterkennungseinheit dargestellt, die davon ausgeht, dass die Ortungseinheit während der Fährefahrt GPS-Signale normal empfangen kann und dass sich auf der Fähre das Fahrzeug mehrfach bewegen oder umparken kann.

Vor Beginn einer Fährefahrt verhält sich die Ortungseinheit entsprechend des üblichen Betriebs wie folgt:
- die Ortungseinheit wird gestartet, sobald das Endgerät eingeschaltet ist,
- die Ortungsnachlaufzeit wird auf einen Initialwert gesetzt,
- die Ortungseinheit bleibt innerhalb der Ortungsnachlaufzeit nach dem Ausschalten des Endgerätes weiterhin aktiv,
- bei Stillstand des Fahrzeugs oder bei Ausschalten des Endgerätes oder nach der Ortungsnachlaufzeit und vor dem Ausschalten der Ortungseinheit werden die letzten Ortungsdaten in den Flash-Speicher geschrieben,
- bei fehlenden Signalen aus den Geschwindigkeitssensoren ignoriert die Ortungseinheit die empfangenen GPS-Daten und gibt den zuletzt bestimmten Satz von Ortungsdaten aus, in diesem Fall wird vom Einfrieren der Ortungsberechnung gesprochen,

Anschließend erfolgt die manuelle oder automatische Feststellung ob eine Fährefahrt erfolgt. Falls dies zutrifft werden folgende Aktionen durchgeführt:
- die Ortungsnachlaufzeit wird verlängert,
- das Ortungsverhalten wird modifiziert, so dass die Ortungsberechnung u. a. unter Einbeziehung der empfangenen GPS-Daten aufrechterhalten wird und zwar entweder bei eingeschaltetem Endgerät oder während der verlängerten Ortungsnachlaufzeit bei ausgeschaltetem Endgerät,
- während der Fährefahrt wird eine entsprechende Mitteilung dazu z. B. "Sie befinden sich auf einer Fähre" akustisch und/oder optisch ausgegeben, falls das Endgerät eingeschaltet ist, zusätzlich können dabei der Fährename und sonstige Informationen über die Fähre ausgegeben werden, falls sie vorhanden sind,
- das "Onroad" beziehungsweise "Geradeausfahren" wird als Fahrempfehlung ausgegeben, falls die Zielführung aktiv ist und das "Offroad" als Fahrempfehlung ausgibt,

Schließlich wird manuell oder automatisch überprüft, ob eine Fährefahrt zu Ende ist. Falls ja, werden folgende Aktionen durchgeführt:
- die ursprüngliche Ortungsnachlaufzeit wird wiederhergestellt,
- das ursprüngliche Ortungsverhalten entsprechend des üblichen Betriebs wird wiederhergestellt.

In der schematischen Darstellung in Figur 2 ist eine Fähre oder ein Autoverladezug im zu befahrenden Gebiet modelliert. Anhand dieses Modells soll eine Fähre oder ein Autoverladezug digital erfasst und in den Datenspeicher für das Wegenetz des Gebiets integriert werden. Das Modell sieht vor:
- Punkt A und D werden jeweils als Zufahrtspunkt der Fähre und Punkt B und C jeweils als Anfangs- und Endstelle der Fähre gekennzeichnet. Die Anfangs- und Endstelle der Fähre sollte direkt am Ufer liegen. Die Zufahrtspunkte und Anfangs- und Endstellen sollten eine Positionsgenauigkeit von beispielsweise besser als 5 Metern haben und die Entfernung dazwischen sollte angemessen sein z. B. zwischen 50 und 100 Metern. Sinnvollerweise sollte ein Zufahrtspunkt an einer Kreuzung liegen,
- an Zufahrtspunkt A wird Punkt B als seine anschließende Fähreanfangsstelle markiert, ebenfalls wird an Zufahrtspunkt D der Punkt C als seine anschließende Fähreanfangsstelle gekennzeichnet,
- an der Fähreanfangsstelle B wird Punkt C als ihre anschließende Fähreendsstelle markiert. Ebenfalls wird an Fähreanfangsstelle C Punkt B als ihre anschließende Fähreendsstelle gekennzeichnet.
- An Fähreanfangsstelle B wird die durchschnittliche Fahrtdauer der Fähre zum Punkt C sowie die durchschnittliche Wartezeit Wz nach Passieren der Anfangsstelle B bis zum Losfahren hinterlegt, während an Fähreanfangsstelle C die durchschnittliche Fahrtdauer der Fähre zum Punkt B sowie die durchschnittliche Wartezeit nach Passieren der Anfangsstelle C bis zum Losfahren ebenfalls abgelegt wird.

Zusätzlich können der Fährename sowie sonstige Informationen über die Fähre erfasst und als Attribute der Strecke BC gespeichert werden.

Eine Fähre kann auch in einer vereinfachten Weise modelliert werden, indem sie nur durch eine Anfangsstelle B und eine Endstelle C und gegebenfalls durch einen Fährename beschrieben wird.

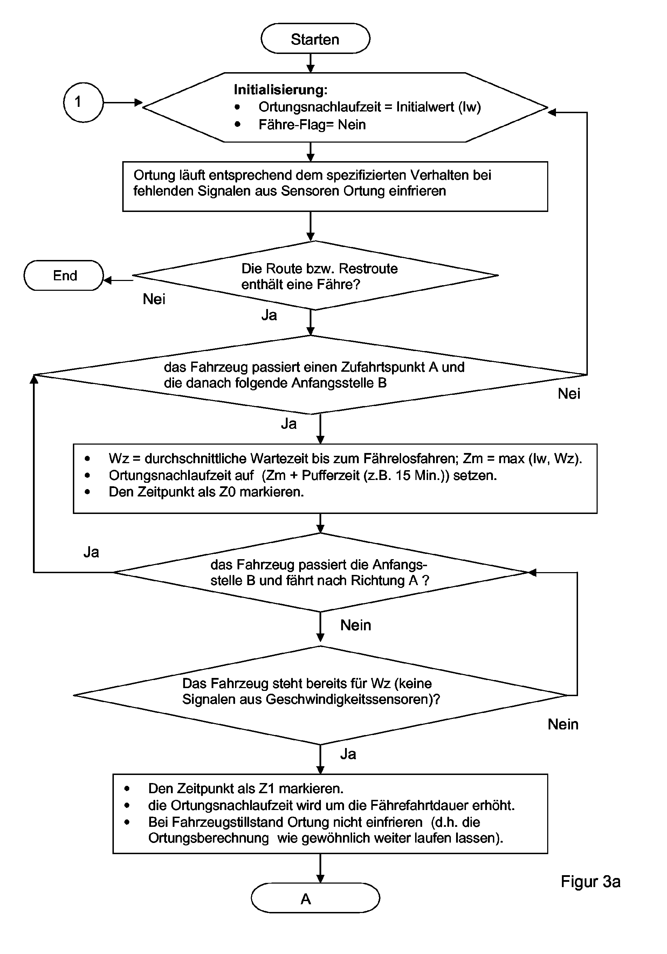

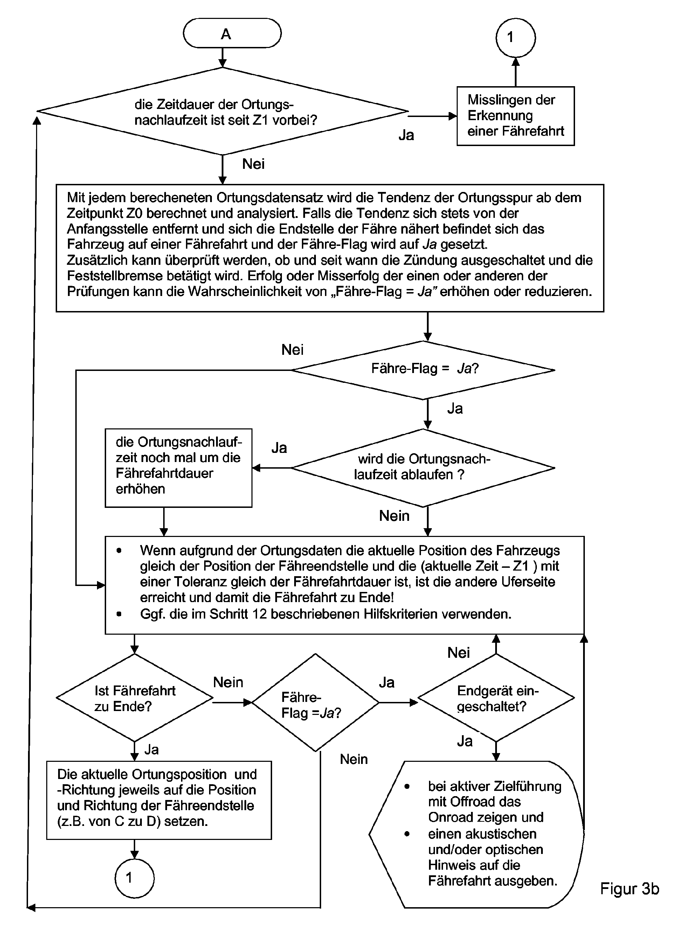

Zur Vereinfachung der Darstellung ist das Flussdiagramm für das Ausführungsbeispiel zur automatischen Fährefahrterkennung und zur Fortführung der Ortungsberechnung unter Nutzung des in Figur 2 beschriebenen Fähremodells auf zwei Zeichnungen aufgeteilt, wobei die Vorgehensweise im Kästchen "A" in Figur 3b oben sich an das Kästchen "A" in Figur 3a unten anschließt und das Kästchen "1" seitenübergreifende Querverbindungen darstellt.

Die in den Figuren 3a und 3b als Ausführungsbeispiel dargestellte Fährefahrterkennungseinheit ist derart konzipiert, dass sie folgenden Tatsachen nach Möglichkeit Rechnung trägt, die in einem realen Betrieb auftreten können:
- das Fahrzeug kann nachdem es den Zufahrtspunkt und die Anfangsstelle passiert hat an der Anfangstelle parken und nicht auf eine Fähre auffahren,
- das Fahrzeug kann nachdem es den Zufahrtspunkt und die Anfangsstelle passiert hat wieder umdrehen und sich in Richtung des Zufahrtspunkts bewegen,
- auf der Fähre kann das Endgerät weiterlaufen oder mehrfach aus- und eingeschaltet werden,
- sowohl Ortungsdaten als auch modellierte Fähren mit Zufahrtspunkten, Anfangsstellen und Endstellen haben gewisse geometrische Ungenauigkeiten,
- auf der Fähre kann der Fahrzeugmotor weiterlaufen oder mehrfach aus- und eingeschaltet werden,
- auf der Fähre kann die Navigationszielführung weiterlaufen oder mehrfach aus- und eingeschaltet werden,
- eine Fährefahrt kann z. B. aufgrund äußerer Umstände länger als gewöhnlich dauern.
- das Fahrzeug kann sich auf der Fähre merhfach bewegen bzw. umfahren. Dabei kann die Feststellbremse ebenfalls mehrfach angezogen bzw. gelöst werden.

Eine laufende Fährefahrt wird durch einen Fähre-Flag = *Ja* gekennzeichnet.

Ausgehend von einer Fahrtroute mit einer oder mehreren mit dem in Figur 2 beschriebenen Ansatz modellierten Fähren läuft ein Fährefahrterkennung wie aus dem Flussdiagramm in den Figuren 3a, 3b ersichtlich ab:
1. das Ortungsverhalten erfolgt entsprechend des üblichen Betriebs und der Fährefahrtkennungs-Fähre-Flag ist auf seinen Initialwert "*Nein* "gesetzt,
2. anschließend wird überprüft, ob anhand der aktuellen Fahrtroute noch eine Fährefahrt bevorsteht, falls nein wird die Fährefahrterkennungseinheit beendet,
3. anschließend erfolgt die Überprüfung ob das Fahrzeug einen Zufahrtspunkt z. B. A passiert hat und sich in die Richtung der Anfangsstelle z. B. B bewegt und diese passiert, falls nein wird mit dem Schritt 1 fortgesetzt,
4. die Ortungsnachlaufzeit wird auf den Maximalwert der beiden Zeitspannen für die übliche Ortungsnachlaufzeit Initialwert Iw und die durchschnittliche Fährewartezeit Wz gesetzt und anschließend zusätzlich um eine Pufferzeit z. B. 15 Min. erhöht, die aktuelle Zeit wird als Zeitpunkt Z0 notiert,
5. es wird geprüft, ob das Fahrzeug wieder in den Zufahrtsbereich zurückfährt, falls ja wird mit dem Schritt 3 fortgesetzt,
6. es wird überprüft, ob das Fahrzeug bereits für die Zeitdauer Wz stillsteht, falls nein wird mit dem Schritt 5 fortgesetzt,
7. die aktuelle Zeit wird als Zeitpunkt Z1 notiert und die Ortungsnachlaufzeit wird um die durchschnittliche Fährefahrtdauer von der Anfangsstelle zur Endstelle z. B. C erhöht, das Ortungsverhalten wird modifiziert, so dass die Ortungsberechnung u. a. unter Einbeziehung der empfangenen GPS-Daten aufrechterhalten wird und zwar entweder bei eingeschaltetem Endgerät oder während der verlängerten Ortungsnachlaufzeit bei ausgeschaltetem Endgerät,
8. es wird festgestellt, ob die Zeitdauer der im Schritt 7 aktualisierten Ortungsnachlaufzeit seit Zeitpunkt Z1 vorbei ist, falls ja wird die Fährefahrterkennung als gescheitert erklärt und mit dem Schritt 1 fortgesetzt,
9. mit jedem durch die Ortungseinheit berecheneten Ortungsdatensatz wird die Tendenz der Ortungsspur ab dem Zeitpunkt Z0 berechnet und analysiert, falls die Tendenz sich stets von der Anfangsstelle entfernt und der Endstelle der Fähre nähert, d. h. sie eine eindeutige Fahrtspur hinterlässt und eine klare Richtung anzeigt, befindet sich das Fahrzeug auf einer laufenden Fährefahrt und der Fähre-Flag wird auf *Ja* gesetzt, zusätzlich kann überprüft werden, ob und seit wann die Zündung ausgeschaltet und die Feststellbremse betätigt ist, ein Erfolg oder ein Misserfolg einer dieser Prüfungen kann die Wahrscheinlichkeit von Fähre-Flag = *Ja* erhöhen oder reduzieren,
10. es wird überprüft, ob der Fähre-Flag = *Ja* ist, falls nein wird mit Schritt 12 fortgesetzt,
11. nun befindet sich das Fahrzeug auf einer Fährefahrt. falls die Ortungsnachlaufzeit bald abläuft wird sie noch einmal um die Fährefahrtdauer erhöht,
12. anschließend wird bestimmt, ob die Fähreendstelle erreicht ist, wenn aufgrund der Ortungsdaten die aktuelle Position des Fahrzeugs gleich der Position der Fähreendstelle und die aktuelle Zeit - Z1 mit einer Toleranz gleich der Fährefahrtdauer ist, ist die andere Uferseite erreicht und damit die Fährefahrt zu Ende.

Bei der Annäherung an die Endstelle kann es außerdem sinnvoll und hilfreich sein, die in Figur 3b erwähnten Hilfskriterien wie folgt bei der Beurteilung der Beendigung der Fährefahrt heranzuziehen:
- ob die Zeitdauer zwischen dem Zeitpunkt des Wiedereinschaltens der Zündung und dem Zeitpunkt des letzten Zündungsausschaltens abzüglich einer Toleranz gleich ist mit der durchschnittlichen Fährefahrtdauer und/oder
- ob die Zeitdauer zwischen dem Zeitpunkt des Lösens der Feststellbremse und dem Zeitpunkt der letzten Feststellbremsenbetätigung abzüglich einer Toleranz gleich ist mit der durchschnittlichen Fährefahrtdauer und/oder
- ob nach der durchschnittlichen Fährefahrtdauer abzüglich einer Toleranz das Kraftfahrzeug wieder fährt, vorzugsweise muss dabei die Fahrzeugsgeschwindigkeit einen Grenzwert z. B. 20 oder 25 Km/h für eine Mindestdauer von z. B. 60 Sekunden überschreiten.

Mit Erfüllen oder Verfehlen des einen oder anderen der oben genannten Kriterien kann die Wahrscheinlichkeit der Beendigung der Fährefahrt erhöht oder reduziert werden.
13. ist die Fährefahrt zu Ende und die Fähreendstelle erreicht werden die aktuelle Ortungsposition und -richtung jeweils auf die Position und Richtung der Fähreendstelle z.B. von C nach D gesetzt, mit denen sich die Navigationszielführung wieder aufsetzen kann, danach wird mit Schritt 1 fortgesetzt,
14. ist die Fähreendstelle noch nicht erreicht wird überprüft, ob der Fähre-Flag = *Ja* ist, falls nein wird mit Schritt 8 fortgesetzt,
15. die Fährefahrt dauert an, es wird überprüft, ob das Endgerät eingeschaltet ist, falls nein wird mit Schritt 12 fortgesetzt,
16. das Endgerät ist eingeschaltet und eine entsprechende Mitteilung kann akustisch und/oder optisch ausgegeben werden wie beispielsweise "Sie befinden sich auf eine Fährefahrt", zusätzlich können dabei der Fährename und sonstige Informationen über die Fähre ausgegeben werden, falls sie vorhanden sind, es wird das "Onroad" beziehungsweise Geradeausfahren ausgegeben falls die Zielführung aktiv ist und "Offroad" ausgibt, danach wird mit Schritt 12 fortgesetzt.

Es versteht sich, dass die Fährfahrt auch in umgekehrter Reihenfolge, das heißt von der Endstelle C zur Anfangsstelle B, durchgeführt werden kann. Der Zustand der Fahrzeugzündung, der Feststellbremse und Signale der Geschwindigkeitssensoren stehen dem Endgerät in bekannter Weise über Fahrzeugdatenbusse zur Verfügung.

Es wird nachstehend ein weiteres Ausführungsbeispiel für eine automatische Fährefahrterkennung ohne Kenntnisse über die bevorstehende Fährefahrt beschrieben, d. h. es ist dabei nicht nötig, entsprechende Markierungen in dem Datenspeicher und in der Fahrtroute vorzunehmen:
- es wird begonnen mit dem Setzen des Ortungsverhaltens entsprechend dem üblichen Betrieb entsprechend Figur 1 und mit dem Setzen des Fährefahrtkennungs-Fähre-Flags auf seinen Initialwert "*Nein*" falls diese noch nicht geschehen ist, die Initialortungsnachlaufzeit sollte ausreichend groß sein beispielsweise liegt sie bei 35 Min,
- unmittelbar nach der letzten Zündungsausschaltung und gegebenenfalls der letzten Betätigung der Feststellbremse und damit auch des letzten Einfrierens der Ortungseinheit beginnt die übliche Initialnachlaufzeit, innerhalb dieser Zeit ändern sich allerdings noch Ortungsdaten aus dem GPS-Empfänger mit der Fährefahrt obwohl die Ausgabe der Ortungseinheit eingefroren ist, wenn die Spur der GPS-Daten einen klaren Verlauf und eine klare Richtung erkennen lässt und zwar ununterbrochen für z. B. 10 Min. und/oder für einer Entfernung von z. B. 100 Meter wird angenommen, dass eine Fährefahrt stattfindet, in dieser Fall wird der Fähre-Flag auf "*JA"* gesetzt und der aktuelle Zeitpunkt Zf markiert,
- während der Fährefahrt ist der Fähre-Flag = "*JA"* und es kann ab dem Zeitpunkt Zf eine entsprechende Mitteilung z. B. "Sie befinden sich auf einer Fähre" akustisch und/oder optisch ausgegeben werden falls das Endgerät eingeschaltet ist, das "Onroad" oder Geradeausfahren wird ausgegeben falls die Zielführung aktiv ist und das Offroad ausgibt.
- das Ortungsverhalten wird bei Fähre-Flag = "*JA"* ab dem Zeitpunkt Zf modifiziert, so dass die Ortungsberechnung u. a. unter Einbeziehung der empfangenen GPS-Daten aufrechterhalten wird, dies soll durch Verlängerung der Ortungsnachlaufzeit solange beibehalten werden, bis die Fähreendstelle erreicht wird.
- die Fähreendstelle ist erreicht, wenn erstmalig nach dem Setzen des Fähre-Flag= "*JA"* das Fahrzeug wieder bewegt wird, vorzugsweise muss dabei die Fahrzeuggeschwindigkeit einen Grenzwert z. B. 20 oder 25 Km/h für eine Mindestdauer von z. B. 60 Sekunden überschreiten,
- bei Erreichen der Fähreendstelle wird der Fährefahrtkennungs-Fähre-Flag wieder auf seinen Initialwert "*Nein*" gesetzt und das ursprüngliche Ortungsverhalten wiederhergestellt, damit erhält die Zielführung ab dem Zeitpunkt Zf stets richtige Ortungsdaten sobald sie aktiviert wird.

Es wird nachstehend ein weiteres Ausführungsbeispiel für eine automatische Fährefahrterkennung mit dem vereinfachten Fähremodell im Datenspeicher und somit auch in der Fahrtroute beschrieben:
- es wird begonnen mit dem Setzen des Ortungsverhaltens entsprechend dem üblichen Betrieb entsprechend Figur 1 und mit dem Setzen des Fährefahrtkennungs-Fähre-Flag auf seinen Initialwert "*Nein"* falls diese noch nicht geschehen ist, die Initialortungsnachlaufzeit sollte ausreichend groß sein beispielsweise liegt sie bei 35 Min.
- unmittelbar nach dem letzten Ausschalten der Zündung und gegebenenfalls dem letzten Betätigen der Feststellbremse und damit des letzten Einfrierens der Ortungseinheit beginnt die übliche Initialnachlaufzeit, innerhalb dieser Zeit ändern sich allerdings noch Ortungsdaten aus dem GPS-Empfänger mit der Fährefahrt obwohl die Ausgabe der Ortungseinheit eingefroren ist, wenn die Spur der GPS-Daten einen klaren Verlauf und eine klare Richtung erkennen lässt und zwar ununterbrochen für z. B. 5 Min. und/oder für eine Entfernung von z. B. 50 Meter und das Fahrzeug die Fähreanfangsstelle durch Vergleich der Position mit der Spur aus den GPS-Daten passiert hat wird angenommen, dass eine Fährefahrt stattfindet, in dieser Fall wird der Fähre-Flag auf "*JA"* gesetzt und der aktuelle Zeitpunkt Zf markiert,
- während der Fährefahrt ist der Fähre-Flag = "*JA*" und es kann ab dem Zeitpunkt Zf eine entsprechende Mitteilung dazu z. B. "Sie befinden sich auf einer Fähre" akustisch und/oder optisch ausgegeben werden falls das Endgerät eingeschaltet ist, dabei kann der Fährename genannt werden, falls er vorhanden ist, das "Onroad" beziehungsweise Geradeausfahren wird ausgegeben falls die Zielführung aktiv ist und das Offroad ausgibt,
- das Ortungsverhalten wird bei Fähre-Flag = "*JA"* ab dem Zeitpunkt Zf modifiziert, so dass die Ortungsberechnung u. a. unter Einbeziehung der empfangenen GPS-Daten aufrechterhalten bleibt, dies soll durch Verlängerung der Ortungsnachlaufzeit solange beibehalten werden, bis die Fähreendstelle erreicht wird,
- die Fähreendstelle ist erreicht, wenn ihre Position mit der durch die Ortungseinheit ermittelten Position abzüglich einer Toleranz übereinstimmt und erstmalig nach dem Setzen des Fähre-Flag= "*JA"* das Fahrzeug wieder bewegt wird, vorzugsweise muss dabei die Fahrzeuggeschwindigkeit einen Grenzwert z. B. 20 oder 25 Km/h für eine Mindestdauer von z. B. 60 Sekunden überschreiten,
- bei Erreichen der Fähreendstelle wird der Fährefahrtkennungs-Fähre-Flag wieder auf seinen Initialwert "*Nein*" gesetzt und das ursprüngliche Ortungsverhalten wiederhergestellt, damit erhält die Zielführung ab dem Zeitpunkt Zf stets richtige Ortungsdaten sobald sie aktiviert wird.

## Patentansprüche

1. Verfahren zum Betreiben eines Navigationssystems in einem Kraftfahrzeug mit einer Ortungseinheit, einer Routenberechnungseinheit und einer Navigationszielführungseinheit zur Ausgabe von Richtungsangaben und mit einem Datenspeicher für das Wegenetz des zu befahrenden Gebiets, **dadurch gekennzeichnet, dass** bei Passieren einer Anfangsstelle (B) einer Fähre, die im Datenspeicher markiert ist, die bevorstehende Fährefahrt durch eine Fährefahrterkennungseinheit erkannt wird, so dass eine Ortungsberechnung während der gesamten Fährefahrt aufrechterhalten wird.

2. Verfahren nach Anspruch 1, **dadurch gekennzeichnet, dass** eine Endstelle (C), die angefahren wird, im Datenspeicher markiert ist.

3. Verfahren nach Anspruch 1 oder 2, **dadurch gekennzeichnet, dass** der Anfangsstelle (B) und der Endstelle (C) jeweils ein Zufahrtspunkt (A, D) zugeordnet sind, die vom Kraftfahrzeug passiert werden, und die Zufahrtspunkte (A, D) im Datenspeicher markiert sind.

4. Verfahren nach einem der Ansprüche 1 bis 3, **dadurch gekennzeichnet, dass** die Nachlaufzeit für die Ortungseinheit und somit auch für die Fährefahrterkennungseinheit verlängert wird, insbesondere auf eine durchschnittliche Wartezeit nach Passieren der Anfangsstelle (B) und eine durchschnittliche Zeit für eine Fahrt (F) zwischen Anfangsstelle (B) und Endstelle (C) und eine Pufferzeit.

5. Verfahren nach einem der Ansprüche 1 bis 4, **dadurch gekennzeichnet, dass** bei eingeschaltetem Endgerät von der Fährefahrterkennungseinheit eine akustische und/oder optische Mitteilung ausgegeben wird, dass sich das Kraftfahrzeug auf der Fahrt (F) von der Anfangsstelle (B) zur Endstelle (C) befindet und/oder bei der aktiven Navigationszielführung mit Offroad Ausgabe stets die Fahrempfehlung für "Onroad" beziehungsweise Geradeausfahren ausgegeben wird.

6. Verfahren nach einem der Ansprüche 1 bis 5, **dadurch gekennzeichnet, dass** die Durchführung einer Fährfahrt (F) in das Endgerät beziehungsweise Navigationssystem manuell eingebbar ist.
